# EUROPEAN PATENT APPLICATION

(11) **EP 3 033 934 A1**
(43) Date of publication of application: **22.06.2016**
(21) Application number: 14889784.6
(22) Date of filing: 20.11.2014
(51) Int. Cl.: A01D 34/52

(54) **CUTTING DEVICE**

(30) Priority: 14.11.2014 CN 201410641849
(71) Applicant: Shangyu Guanye Electrical Appliance Co. Ltd., Shaoxing, Zhejiang 312367 (CN)
(72) Inventor: DAI, Guangqian, Ningbo Zhejiang 315801 (CN); WU, Yongwei, Ningbo Zhejiang 315801 (CN)
(74) Representative: Sun, Yiming
(86) International application number: PCT/CN2014/091756
(87) International publication number: WO 2016/074270

(57) **Abstract**

The present invention relates to a cutting device, comprising a first blade and a blade holding mechanism making a circular motion relative to the first blade, wherein the blade holding mechanism is fitted with a second blade; wherein the first blade is made with cutting notches and wherein the second blade and/or the cutting notches are made with cutting planes. The cutting device described in the present invention is a simple and high-efficiency machine that is easy to operate, requires much less driving force and energy for the same cutting area, does not damage plants, makes a neat cutting section and produces cuttings that are easy to be collected.

## Description

### BACKGROUND OF THE INVENTION

### Technical Field

The present invention relates to a cutting device.

### Description of Related Art

A mower is a mechanical tool to trim lawns and vegetation, which can comprise cutting discs, an engine, traveling wheels, a traveling mechanism, blades, a grip and a control. Cutting devices available on the market presently are divided into the following types: 1. Machine with drive axle fitted with a cutting strip or rope, as described in CN201210002402.6 titled "A combined cutting tool for mowers." The rapid rotation of its drive axle drives the cutting strip or rope to cut grass. Such machine requires high driving force and high energy consumption. Additionally, the cutting section is not neat and damages plants easily. 2. Machine with drive axle fitted with a cutter knife, as described in CN201210496286.8 titled "A cutting device for mowers and the fitting method thereof." The rapid rotation of its drive axle drives the cutter knife to cut grass. Likewise, such machine requires high driving force and high energy consumption. Additionally, the cut section is not neat and damages plants easily. 3. A scissor-type cutting machine, as described in CN201310256866.4 titled "A mower with two tiers of blades", and cutting of this type of machine is done by means of two cutting blades arranged in tiers. Such machine has the following disadvantages: it is difficult to collect cuttings and the two blades are easily damaged due to the gap between them. 4. A roller-type cutting machine, as described in CN201110431994.9 titled "A hob-type mowing mechanism", and cutting of this type of machine is done by means of a hob-type cutter knife. This manner of cutting has the following disadvantages: high manufacturing cost, high manufacturing accuracy, limitations by the height of the roller's cutter knife on cutting length and lack of capability to cut relatively long plants.

### BRIEF SUMMARY OF THE INVENTION

The objective of the present invention is to provide a simple and high-efficiency cutting device that is easy to operate, requires much less driving force and energy for the same cutting area, does not damage plants, makes a neat cutting section and creates cuttings that are easy to be collected.

To achieve the objective above, the technical solution of the present invention is cutting device that can comprise a first blade and a blade holding mechanism making a circular motion relative to the first blade, wherein the blade holding mechanism is fitted with the second blade; wherein the first blade is made with cutting notches; and wherein the second blade and/or the cutting notches are made with cutting planes.

The blade holding mechanism that can comprise a drive axle on which more than one blade holding frame, wherein the blade holding frame are fitted with the second blade.

The blade holding frame that can comprise a holding axis, wherein the holding axis is fitted with blade mounts, wherein each of the blade mounts is fitted with a second blade 4, and wherein the blade mounts on the two adjacent holding frames on the blade mounts can form an angle of 0-60°.

The holding axis can be fitted with three blade mounts at equal intervals.

The angle between the extension line of the drive axle's radius and the second blade can be 10-45°.

The second blade can have an arc shape and the first blade is made with arc-like cutting notches.

The second blade can have a triangle shape and the first blade is made with triangle-like cutting notches.

The second blade can have a rectangle shape and the first blade can be made with rectangle-like cutting notches.

The advantages of the present invention is to provide a simple and high-efficiency cutting device that is easy to operate, requires much less driving force and energy for the same cutting area, does not damage plants, makes a neat cutting section and create cuttings easy to be collected.

### BRIEF DESCRIPTION OF THE SEVERAL VIEWS OF THE DRAWINGS

FIG. 1 is a structural diagram of Embodiment I;
FIG. 2 is a sectional diagram of the cutting device in FIG. 1;
FIG. 3 is a structural diagram of Embodiment II;
FIG. 4 is a sectional diagram of the cutting device in FIG. 3;
FIG. 5 is a structural diagram of Embodiment III;
FIG. 6 is a sectional diagram of the cutting device in FIG. 5.

### DETAILED DESCRIPTION OF THE INVENTION

### Embodiment 1

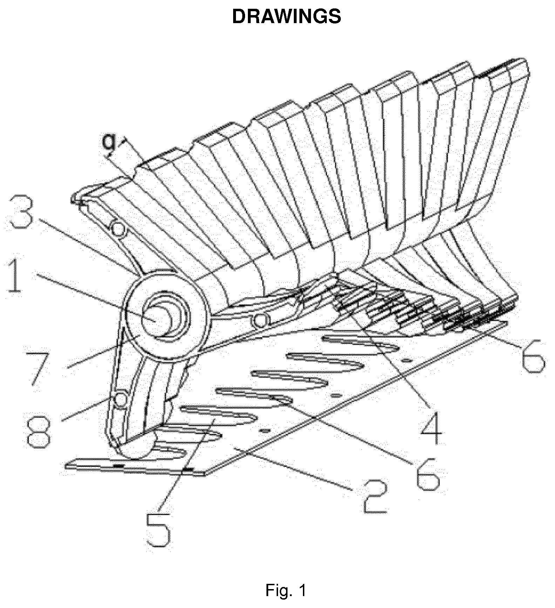

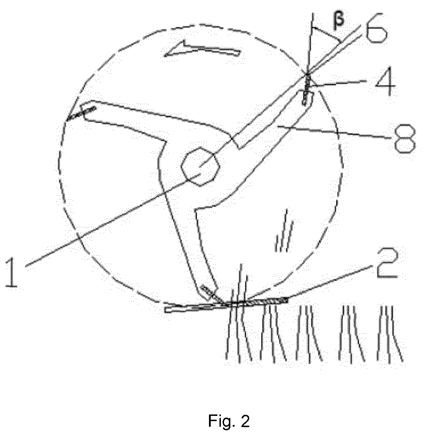

FIG. 1 and FIG. 2 illustrate a cutting device, comprising a driving axle 1 and a first blade 2, wherein the driving axle 1 and the first blade 2 are fitted on the cutter. The driving axle 1 is fitted with more than 8 blade holding frames 3, each of the blade holding frame 3 is fitted with a second blade 4, the first blade 2 is made with cutting notches 5, the second blade 4 and the cutting notches 5 are made with cutting planes 6. The second blade 4 has an arc shape and the first blade 2 is made with arc-like cutting notches matching the arc-like second blade.

The blade holding frame 3 comprises a holding axis 7, the holding axis 7 is fitted with blade mounts 8, each of the blade mounts 8 is fitted with a second blade 4, and the blade mounts 8 on the two adjacent holding frames 3 on the blade mount 8 form an angle α of 12° . The holding axis 7 is fitted with three blade mounts 8 at equal intervals. The included angle β between the extension line of the drive axle 1's radius and the second blade 4 is 10° .

During the application of the cutting device according to the embodiment to cut grass or plants, the driving axle 1 drives the blade holding frame 3 to make a circular motion and the arc-like second blade 4 fitted in the blade mount 8 slide through the arc-like cutting notches 5 so that grass or plants in the arc-like cutting notches 5 is cut off by the clipping force between the cutting notches 5 and the second blade 4.

The cutting device according to the embodiment is a simple and high-efficiency machine that is easy to operate, requires much less driving force and energy for the same cutting area, does not damage plants, makes a neat cutting section and creates cuttings that are easy to be collected.

### Embodiment 2

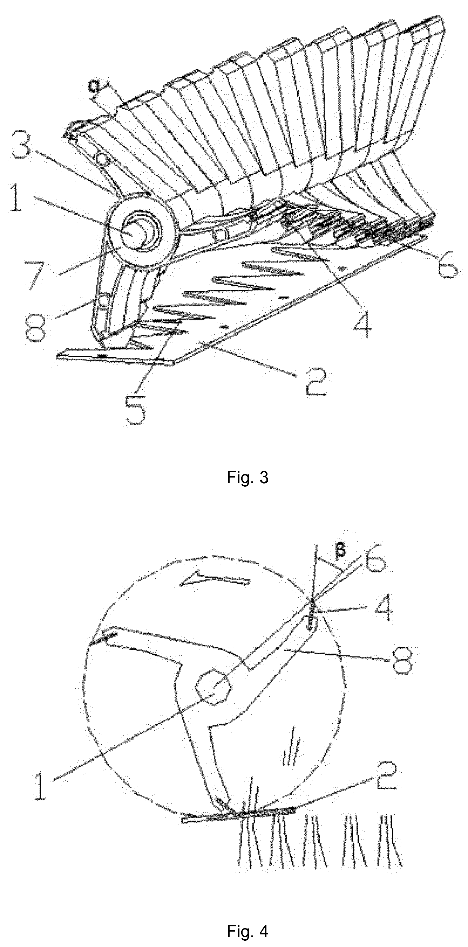

FIG. 3 and FIG. 4 illustrate a cutting device, comprising a driving axle 1 and a first blade 2, wherein the driving axle 1 and the first blade 2 are fitted on the cutter. The driving axle 1 is fitted with more than 8 blade holding frames 3, each of the blade holding frame 3 is fitted with a second blade 4, the first blade 2 is made with cutting notches 5, and the second blade 4 is made with a cutting plane 6. The second blade 4 has a triangle shape and the first blade 2 is made with triangle-like cutting notches matching the triangular second blade.

The blade holding frame 3 comprises a holding axis 7, the holding axis 7 is fitted with blade mounts 8, each of the blade mounts 8 is fitted with a second blade 4, and the blade mounts 8 on the two adjacent holding frames 3 form an angle α of 30° . The holding axis 7 is fitted with three blade mounts 8 at equal intervals. The angle β between the extension line of the drive axle 1's radius and the second blade 4 is 35°.

During the application of the cutting device according to the embodiment to cut grass or plants, the driving axle 1 drives the blade holding frame 3 to make a circular motion and the triangle-like second blade 4 fitted in the blade mount 8 slide through the triangle-like cutting notches 5 so that grass or plants in the triangle-like cutting notches 5 is cut off by the clipping force between the cutting notches 5 and the second blade 4.

The cutting device according to the embodiment is a simple and high-efficiency machine that is easy to operate, requires much less driving force and energy for the same cutting area, does not damage plants, makes a neat cutting section and produces cuttings that are easy to be collected.

### Embodiment 3

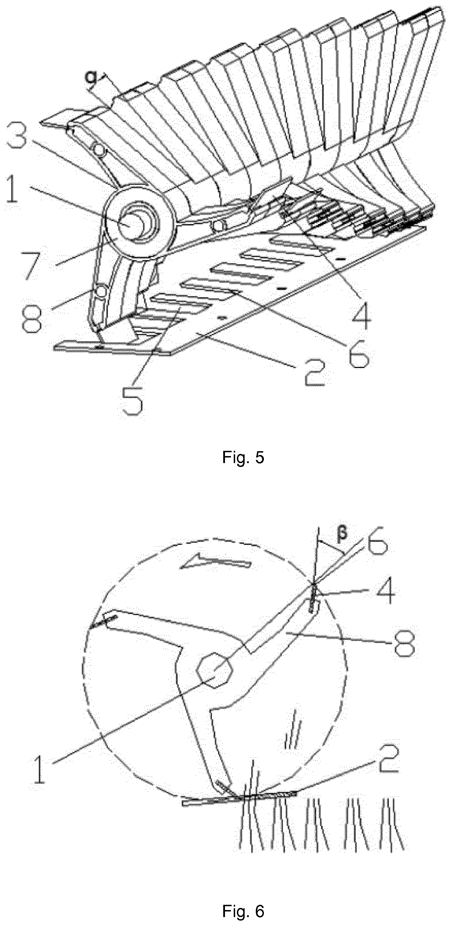

FIG. 5 and FIG. 6 illustrate a cutting device, comprising a driving axle 1 and a first blade 2, wherein the driving axle 1 and the first blade 2 are fitted on the cutter. The driving axle 1 is fitted with more than 8 blade holding frames 3, each of the blade holding frame 3 is fitted with a second blade 4, the first blade 2 is made with cutting notches 5, and each of the second cutting notches 5 is made with a cutting plane 6. The second blade 4 has a rectangle shape and the first blade 2 is made with rectangle-like cutting notches matching the rectangle-like second blade.

The blade holding frame 3 comprises a holding axis 7, the holding axis 7 is fitted with blade mounts 8, each of the blade mounts 8 is fitted with a second blade 4, and the blade mounts 8 on the two adjacent holding frames 3 form an angle α of 60°. The holding axis 7 is fitted with three blade mounts 8 at equal intervals. The angle β between the extension line of the drive axle 1's radius and the second blade 4 is 45°.

In application of the cutting device according to the embodiment to cut grass or plants, the driving axle 1 drives the blade holding frame 3 to make a circular motion and the rectangle-like second blade 4 fitted in the blade mount 8 slide through the rectangle-like cutting notches 5 so that grass or plants in the rectangle-like cutting notches 5 is cut off by the clipping force between the cutting notches 5 and the second blade 4.

The cutting device according to the embodiment is a simple and high-efficiency machine that is easy to operate, requires much less driving force and energy for the same cutting area, does not damage plants, makes a neat cutting section and produces cuttings that are easy to be collected.

## Claims

1. A cutting device comprising a first blade (2) and a blade holding mechanism capable of making a circular motion relative to the first blade (2), wherein the blade holding mechanism is fitted with a second blade (4); wherein the first blade (2) is made with cutting notches (5) and wherein the second blade (4) and/or the cutting notches (5) are made with cutting planes (6).

2. The cutting device as claimed in Claim 1, wherein the blade holding mechanism further comprising a drive axle (1) which further comprising at least one blade holding frame (3), and wherein the blade holding frame (3) are fitted with the second blade (4).

3. The cutting device as claimed in Claim 2, wherein the blade holding frame (3) further comprising a holding axis (7), wherein the holding axis (7) is fitted with blade mounts (8), wherein the said blade mounts (8) is fitted with a second blade (4), and wherein the blade mounts (8) on the two adjacent holding frames (3) on the said blade mounts (8) form an angle of 0-60°.

4. The cutting device as claimed in Claim 3, wherein the holding axis (7) is fitted with three blade mounts (8) at equal intervals.

5. The cutting device as claimed in Claim 2, wherein the angle between the extension line of the radius of the drive axle (1) and the second blade (4) is 10-45°.

6. The cutting device as claimed in Claim 1, wherein the second blade (4) has an arc shape and the first blade (2) is made with arc-like cutting notches.

7. The cutting device as claimed in Claim 1, wherein the second blade (4) has a triangle shape and the first blade (2) is made with triangle-like cutting notches.

8. The cutting device as claimed in Claim 1, wherein the second blade (4) has a rectangle shape and the first blade (2) is made with rectangle-like cutting notches.
